# EUROPEAN PATENT SPECIFICATION

(11) **EP 4 556 992 B1**
(45) Date of publication and mention of the grant of the patent: **15.04.2026**
(21) Application number: 24191330.0
(22) Date of filing: 29.07.2024
(51) Int. Cl.: G02F 1/1339, G02F 1/1333

(54) **DISPLAY DEVICE**
ANZEIGEVORRICHTUNG
DISPOSITIF D'AFFICHAGE

(30) Priority: 15.11.2023 KR 20230158281
(43) Date of publication of application: 21.05.2025
(73) Proprietor: LG Display Co., Ltd., Seoul 07336 (KR)
(72) Inventor: LIM, Hwachun, 10845 Paju-si (KR); LEE, Kyujin, 10845 Paju-si (KR); LEE, Gunwoo, 10845 Paju-si (KR)
(74) Representative: Ter Meer Steinmeister & Partner

(56) References cited:
- WO-A1-2019/240136
- JP-A- 2014 010 211

## Description

### BACKGROUND

### Field

The present disclosure relates to a display device, and more particularly, to a display device capable of measuring a cell gap in a bezel area.

### Description of the Related Art

Recently, with the increase in interest in information displays and the increasing demand for portable information media, research and commercialization have been focused on lightweight, thin-film flat panel displays (FPD). Among the flat panel displays, a liquid crystal display (LCD) refers to a device that displays images by using optical anisotropy of liquid crystals.

The liquid crystal display broadly includes a color filter substrate, an array substrate, and a liquid crystal layer formed between the color filter substrate and the array substrate.

JP 2014 010211 A describes a liquid crystal device that includes: a pair of substrates; a first seal part which bonds the pair of substrates disposed facing each other, and is provided with a first inlet for injecting the liquid crystal between the pair of substrates; a second seal part which is disposed more on the inner side than the first seal part, has a second inlet communicated with a pixel region on a side part other than a side where the first inlet of the first seal part is provided, and configures a bypass approach route of the liquid crystal with the first seal part; inorganic alignment films provided respectively on the pair of substrates; a common electrode; and a plurality of wirings.

WO 2019/240136 A1 describes a liquid crystal display device that includes: first and second substrates; a liquid crystal layer that is held between the first and second substrates; a first seal material that surrounds the liquid crystal layer and that seals the liquid crystal layer between the first and second substrates; and a second seal material that surrounds the first seal material at an interval therefrom

### SUMMARY

An object to be achieved by the present disclosure is to provide a display device capable of measuring and monitoring a cell gap in a bezel area by sensing a capacitance.

Objects of the present disclosure are not limited to the above-mentioned objects, and other objects, which are not mentioned above, can be clearly understood by those skilled in the art from the following descriptions.

At least one of these objects is solved by the subject-matter of the independent claim. Refinements and advantageous embodiments are defined by the respective dependent claims.

A display device according to the claimed invention inter alia includes a first substrate including a display area and a non-display area, a second substrate attached to the first substrate in a state in which a first sealant is disposed, a first liquid crystal layer disposed inside the first sealant, a second sealant disposed outside the first sealant, a second liquid crystal layer disposed between the first sealant and the second sealant, a first electrode disposed over the first substrate in the non-display area, and a second electrode disposed over the second substrate in the non-display area and configured to define a capacitance together with the first electrode, for measuring and monitoring a cell gap in a bezel area.

A display device according to the claimed invention inter alia includes a first substrate including a display area and a non-display area; a second substrate attached to the first substrate; a first sealant disposed between the first substrate and the second substrate; a first liquid crystal layer disposed between the first substrate and the second substrate, the first liquid crystal layer being disposed inside and/or surrounded by the first sealant; a second sealant disposed between the first substrate and the second substrate, the second sealant being disposed outside and/or surrounding the first sealant; a second liquid crystal layer disposed between the first substrate and the second substrate, the second liquid crystal layer being disposed between the first sealant and the second sealant; and a first electrode and a second electrode disposed in the non-display area.

The first electrode and the second electrode are disposed facing each other with the second liquid crystal layer disposed inbetween. Thereby, a capacitance is formed between the first and second electrode. The first electrode may be disposed over and/or on the first substrate in the non-display area. The second electrode may be disposed over and/or on the second substrate in the non-display area. The display device is configured to monitor and/or sense the capacitance formed between the second electrode and the first electrode, for measuring and monitoring a cell gap in a bezel area.

Aspects and embodiments of the present disclosure may include one or several of the following optional features.

"Inside the first sealant" may be defined as an area of the display device within the first sealant and/or surrounded by the first sealant. "Between the first sealant and the second sealant" may be defined as an area of the display device arranged between the first sealant and the second sealant. The first sealant and/or the second sealant may have a ring shape.

The first electrode and/or the second electrode may have a ring shape. The first electrode and/or the second electrode may surround the display area. The first electrode and the second electrode may be spaced apart from each other, i.e. in a plane parallel to the first and/or second substrate.

The second liquid crystal layer and the first liquid crystal layer may be made of and/or may include different materials. The second liquid crystal layer may function as a dielectric medium of the capacitor formed by the first and second electrode.

The display device may further comprise a first spacer disposed between the first substrate and the second substrate in the display area and configured to maintain a first cell gap.

The display device may further comprise a second spacer disposed between the first substrate and the second substrate in the non-display area and configured to maintain a second cell gap.

The first cell gap and the second cell gap may be different from each other. The first spacer and the second spacer may have different heights.

The second spacer may be disposed between the first electrode and the second electrode.

The display device may further comprise a drive circuit. The drive circuit may be configured to determine and/or sense and/or monitor the capacitance between the first and second electrode
The display device may further comprise a sensing line disposed below the first sealant and/or between the first electrode and the first substrate. One end of the sensing line may be connected to a drive circuit and/or may be supplied with a sensing signal. The sensing line may be electrically connected to the drive circuit and/or may be supplied with a sensing signal. The drive circuit may be included in the display device

The display device may further comprise a plurality of sensor blocks.

The first electrode may be connected to the sensing line through a first contact hole, and the first contact hole may be disposed, one for each sensor block. The first electrode may contact the sensing line through the at least one first contact hole.

The first electrode may have a shape corresponding to the sensor block, and a part of the first electrode may extend toward the sensing line. The first electrode may comprise one or a plurality of rectangular shaped parts and at least one part corresponding to the at least one rectangular shaped part extending therefrom toward the sensing line. The at least one rectangular shaped part may form and/or may include and/or may be part of a sensor block.

The display device may further comprise a third electrode disposed below the second sealant and/or disposed outside the first electrode and/or disposed between the second sealant and the first substrate. "Outside the first electrode" may be defined as an area of the display device disposed opposite to and/or spaced apart from the display area with the first electrode arranged between said area and the display area.

The display device may further comprise a common signal line disposed below the second sealant and/or between the third electrode and the first substrate. One end of the common signal line may be connected to the drive circuit and/or supplied with a common electrode signal. The common signal line may be electrically connected to the drive circuit and/or supplied with the common electrode signal.

The third electrode may be connected to and/or may contact the common signal line through one or a plurality of second contact holes. The second contact hole may be provided as a plurality of second contact holes disposed for each of the blocks, in particular the sensor blocks.

The third electrode may be disposed over and/or overlapping with a portion of the common signal line and/or may be disposed along the common signal line.

The second sealant may include one or a plurality of conductive balls. The second electrode may be connected to the third electrode through the or the plurality of conductive balls. The second electrode may be electrically connected to the third electrode through the or the plurality of conductive balls.

The second electrode may be arranged to cover the or all of the plurality of rectangular shaped parts of the first electrode. The second electrode may have a shape for covering all the plurality of sensor blocks.

The third electrode may be disposed over the common signal line along the common signal line and may overlap the common signal line.

The display device may further comprise a black matrix disposed over the second substrate, the second electrode may be disposed over the black matrix. The black matrix may be disposed between the second electrode and the second substrate.

Other detailed matters of the exemplary embodiments are included in the detailed description and the drawings.

According to the present disclosure, the sealants are doubly formed in the bezel area of the display panel, and the capacitance sensing structure implemented by the upper and lower electrodes is formed in the sealants, such that the cell gap in the bezel area may be measured and monitored. As a result, it is possible to monitor, in real time, the change in capacitance during the module process and immediately cope with a defect. In addition, it is possible to improve reliability by suppressing an image defect, such as a yellow mura or a bright spot, caused by an external force.

The effects according to the present disclosure are not limited to the contents exemplified above, and more various effects are included in the present specification.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is an exploded perspective view schematically illustrating a liquid crystal display device;
FIG. 2 is a top plan view schematically illustrating a display panel according to an embodiment of the present disclosure;
FIG. 3 is a view illustrating an array substrate of the display panel in FIG. 2;
FIG. 4 is a view illustrating a color filter substrate of the display panel in FIG. 2;
FIG. 5 is a view illustrating a cross-section taken along line A-A' in FIG. 2;
FIG. 6 is a view illustrating a cross-section taken along line B-B' in FIG. 2;
FIG. 7 is an enlarged view of part C in FIG. 3; and
FIG. 8 is an enlarged view of part D in FIG. 4.

### DETAILED DESCRIPTION OF THE EMBODIMENT

Advantages and characteristics of the present disclosure and a method of achieving the advantages and characteristics will be clear by referring to exemplary embodiments described below in detail together with the accompanying drawings. However, the present disclosure is not limited to the exemplary embodiments disclosed herein but will be implemented in various forms. The exemplary embodiments are provided by way of example only so that those skilled in the art can fully understand the disclosures of the present disclosure and the scope of the present disclosure.

The shapes, sizes, ratios, angles, numbers, and the like illustrated in the accompanying drawings for describing the exemplary embodiments of the present disclosure are merely examples, and the present disclosure is not limited thereto. Like reference numerals generally denote like elements throughout the specification. Further, in the following description of the present disclosure, a detailed explanation of known related technologies may be omitted to avoid unnecessarily obscuring the subject matter of the present disclosure. The terms such as "including," "having," and "consist of" used herein are generally intended to allow other components to be added unless the terms are used with the term "only". Any references to singular may include plural unless expressly stated otherwise.

Components are interpreted to include an ordinary error range even if not expressly stated.

When the position relation between two parts is described using the terms such as "on", "above", "below", and "next", one or more parts may be positioned between the two parts unless the terms are used with the term "immediately" or "directly".

When an element or layer is disposed "on" another element or layer, another layer or another element may be interposed directly on the other element or therebetween.

Although the terms "first", "second", and the like are used for describing various components, these components are not confined by these terms. These terms are merely used for distinguishing one component from the other components. Therefore, a first component to be mentioned below may be a second component in a technical concept of the present disclosure.

Like reference numerals generally denote like elements throughout the specification.

A size and a thickness of each component illustrated in the drawing are illustrated for convenience of description, and the present disclosure is not limited to the size and the thickness of the component illustrated.

The features of various embodiments of the present disclosure can be partially or entirely adhered to or combined with each other and can be interlocked and operated in technically various ways, and the embodiments can be carried out independently of or in association with each other.

Hereinafter, an exemplary embodiment of the present disclosure will be described in detail with reference to the drawings.

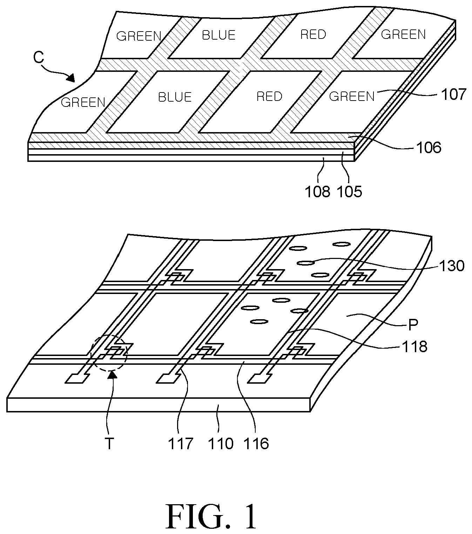

FIG. 1 is an exploded perspective view schematically illustrating a liquid crystal display device.

With reference to FIG. 1, the liquid crystal display device may include a color filter substrate 105, an array substrate 110, and a liquid crystal layer 130 formed between the color filter substrate 105 and the array substrate 110.

A color filter C including a plurality of sub-color filters 107 configured to implement red (R), green (G), and blue (B) colors, a black matrix 106 configured to separate the sub-color filters 107 and block light passing through the liquid crystal layer 130, and a transparent common electrode 108 configured to apply voltages to the liquid crystal layer 130 may be formed over the color filter substrate 105.

A plurality of gate lines 116 and a plurality of data lines 117 arranged in a first, longitudinal direction and a second, transverse direction, respectively. The plurality of gate lines 116 and the plurality of data lines 117 may be configured to define a plurality of sub-pixels P may be formed over the array substrate 110. Thin-film transistors (TFTs) T may be formed in intersection areas between the gate lines 116 and the data lines 117, and pixel electrodes 118 may be formed on the sub-pixels P. The thin-film transistors T and the pixel electrodes 118 may be included in the array substrate 110. Each sub-pixel P may include one TFT T and one pixel electrode 118. The sub-pixels P may be included in a display area AA of the display device.

The color filter substrate 105 and the array substrate 110, which are configured as described above, are attached to be opposite to each other by a sealant (not illustrated) formed at an outer periphery of an image display area, thereby constituting a display panel. The color filter substrate 105 and the array substrate 110 may be attached by means of alignment keys (not illustrated) formed on the color filter substrate 105 or the array substrate 110.

Meanwhile, for convenience of description, an example will be described in which a twisted nematic (TN) method of operating nematic liquid crystal molecules in a direction perpendicular to the substrate is used as a method of operating the liquid crystal display device. However, the present disclosure is not limited thereto. The present disclosure may be applied to an in-plane switching (IPS) type liquid crystal display device that increases a viewing angle to 170 degrees or more by operating liquid crystal molecules in a direction parallel to the substrate.

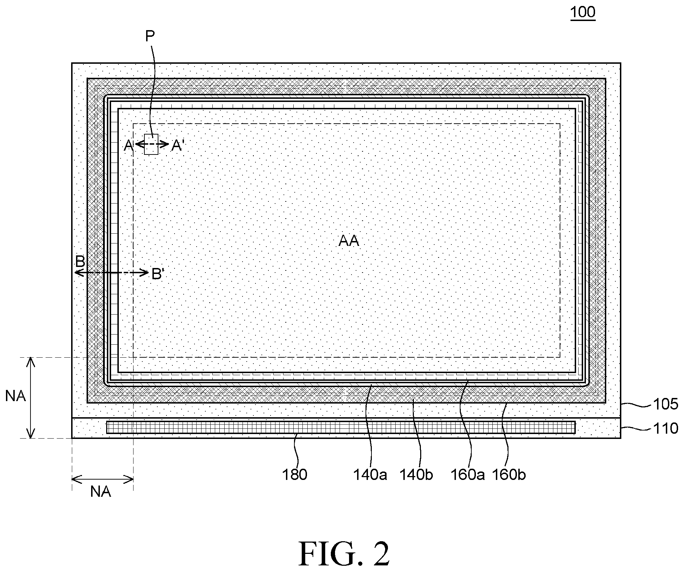

FIG. 2 is a top plan view schematically illustrating a display panel according to an embodiment of the present disclosure.

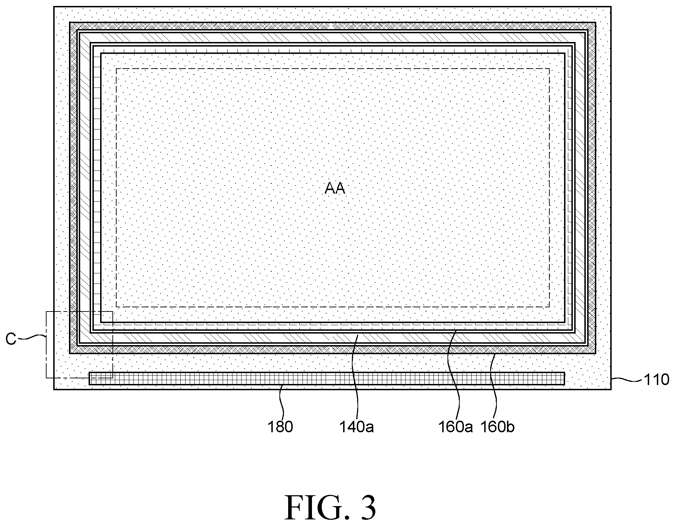

FIG. 3 is a view illustrating an array substrate of the display panel in FIG. 2.

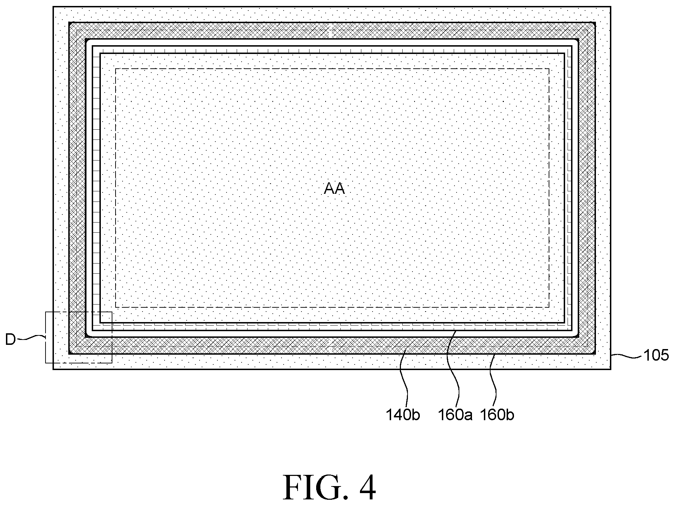

FIG. 4 is a view illustrating a color filter substrate of the display panel in FIG. 2.

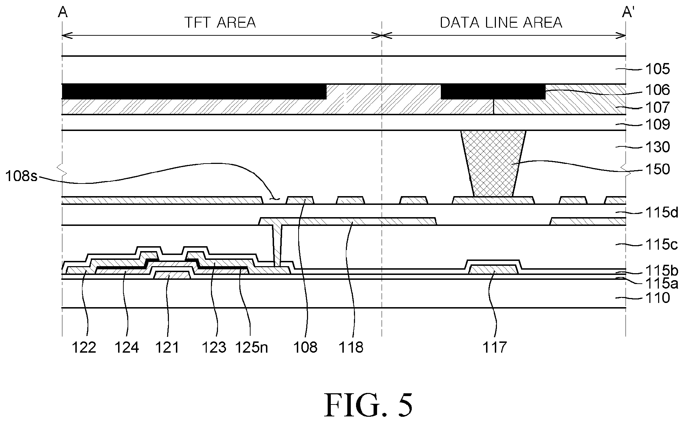

FIG. 5 is a view illustrating a cross-section taken along line A-A' in FIG. 2.

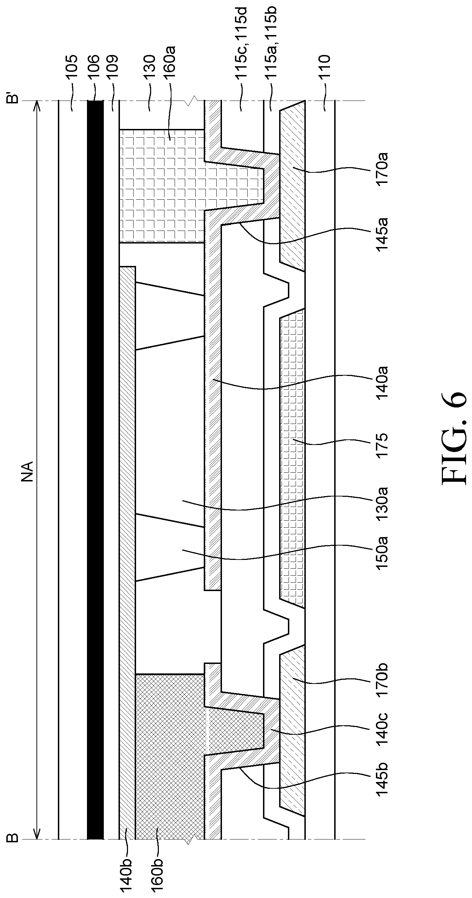

FIG. 6 is a view illustrating a cross-section taken along line B-B' in FIG. 2.

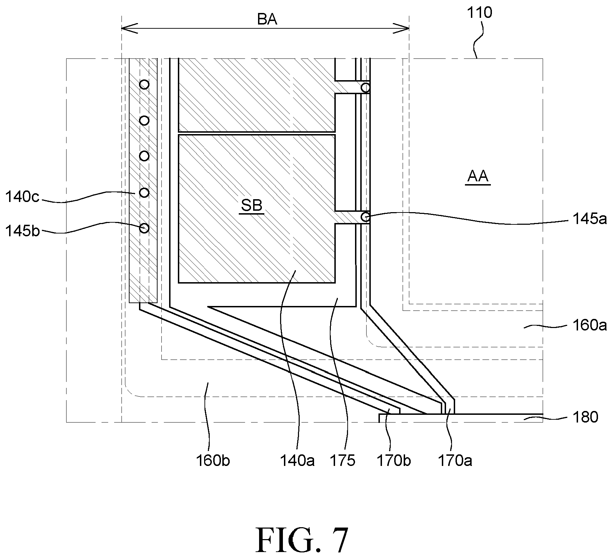

FIG. 7 is an enlarged view of part C in FIG. 3.

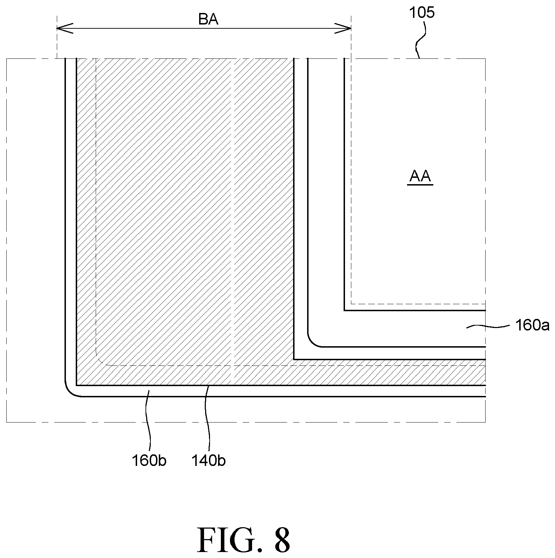

FIG. 8 is an enlarged view of part D in FIG. 4.

An example will be described in which the display device in FIGS. 2 to 8 is a liquid crystal display device. However, the present disclosure is not limited thereto. In addition, the in-plane switching (IPS) method will be described as an example of the method of operating the liquid crystal display device. However, the present disclosure is not limited thereto.

FIGS. 2, 3, and 4 are top plan views illustrating the display panel, the array substrate, and the color filter substrate according to the embodiment of the present disclosure and schematically illustrating only main components of the present disclosure, for convenience of description.

FIG. 5 is a cross-sectional view illustrating a part of an in-plane switching type liquid crystal display device and illustrating a cross-sectional structure of a fringe field switching (FFS) type display panel in which a fringe field formed between a pixel electrode and a common electrode penetrates a slit and operates liquid crystal molecules positioned above a pixel area and the common electrode, thereby implementing images. However, the present disclosure is not limited to the fringe field switching type.

In the fringe field switching type liquid crystal display device, the pixel electrode is formed at a lower side, and the common electrode is formed at an upper side in a state in which the liquid crystal molecules are oriented horizontally, such that an electric field may be generated in the horizontal and vertical directions, and the liquid crystal molecules operate while being twisted and tilted.

In addition, FIG. 5 illustrates a TFT area and a data line area that are display areas of the display panel.

FIG. 6 is a cross-sectional view illustrating a part of a non-display area provided at an outer peripheral portion of the display area of the display panel.

In addition, FIGS. 7 and 8 are enlarged top plan views illustrating a part of the array substrate and a part of the color filter substrate according to the embodiment of the present disclosure and schematically illustrating only the main components of the present disclosure, for convenience of description.

With reference to FIGS. 2 to 4, a display panel 100 according to the embodiment of the present disclosure may include the color filter substrate 105 that is a first substrate, the array substrate 110 that is a second substrate, and the liquid crystal layer 130 formed between the color filter substrate 105 and the array substrate 110. the display panel 110 may further include at least one first spacer 150 which may be formed between the color filter substrate 105 and the array substrate 110 and may maintain a cell gap between the color filter substrate 105 and the array substrate 110. The display panel 100 may be included in a liquid crystal display device according to embodiments of the present disclosure.

In this case, the liquid crystal layer 130 may be referred to as a first liquid crystal layer so as to be distinguished from a second liquid crystal layer 130a to be described below.

In this case, the color filter substrate 105 and the array substrate 110 may include a display area AA and a non-display area NA, and a periphery of the display area AA may be defined as the non-display area NA. The non-display area NA may surround the display area AA. For example, the array substrate 110 has a shape in which the non-display area NA extends to the outside of the color filter substrate 105. A drive circuit 180, which is connected to a gate pad and a data pad and transmits signals, may be disposed in the extended non-display area NA, and a connector, which is fitted with a connector of a terminal line connected to a printed circuit board and transmits signals to the drive circuit 180, may be disposed in the extended non-display area NA.

The color filter, which includes the red, green, and blue sub-color filters 107, may be disposed above and/or on the color filter substrate 105. The black matrix 106, which separates the sub-color filters 107 and blocks light passing through the liquid crystal layer 130, may be disposed above and/or on the color filter substrate 105. An overcoat layer 109, which planarizes an upper portion of the color filter and an upper portion of the black matrix 106, may be disposed above and/or on the color filter substrate 105.

The gate lines (not illustrated) and the data lines 117, which are disposed in the longitudinal and transverse directions and define the pixel area P, may be disposed on the array substrate 110. The thin-film transistor, which are switching elements, may be disposed in the intersection areas, i.e., TFT areas between the gate lines and the data lines 117.

The color filter substrate 105 and the array substrate 110 are attached by means of a first sealant 160a between the color filter substrate 105 and the array substrate 110. The first sealant 160a may serve to join the color filter substrate 105 and the array substrate 110 and assist the first spacer 150, which is disposed in the display panel 100, in maintaining the cell gap between the color filter substrate 105 and the array substrate 110.

In addition, the first sealant 160a may serve to retain a liquid crystal injected between the color filter substrate 105 and the array substrate 110.

For example, the first sealant 160a may be provided in the form of a quadrangular frame. However, the present disclosure is not limited thereto. The first sealant 160a may have a ring shape.

Meanwhile, in the embodiment of the present disclosure, an outer second sealant 160b may be disposed between the color filter substrate 105 and the array substrate 110 in a bezel area BA and disposed outside the first sealant 160a to measure the cell gap. For example, the second sealant 160b may include conductive balls. The bezel area BA may be a part of the non-display area NDA.

For example, the second sealant 160b may be provided in the form of a quadrangular frame that surrounds the first sealant 160a. However, the present disclosure is not limited thereto. The second sealant 160b may have a ring shape.

In addition, the second liquid crystal layer 130a may be disposed between the first sealant 160a and the second sealant 160b. For example, the second liquid crystal layer 130a may be configured as a liquid crystal different in type from the liquid crystal of the liquid crystal layer 130 in the display area AA. However, the present disclosure is not limited thereto.

In addition, a first electrode 140a and a third electrode 140c may be disposed above and/or on the array substrate 110 in the bezel area BA.

For example, the first electrode 140a may be electrically connected to a sensing line 170a through a first contact hole 145a. In addition, the third electrode 140c may be electrically connected to a common signal line 170b through a second contact hole 145b. For example, a gate drive circuit 175 may be disposed between the sensing line 170a and the common signal line 170b. However, the present disclosure is not limited thereto.

In addition, a second electrode 140b may be disposed above and/or on the color filter substrate 105 in the bezel area BA. The second electrode 140b may overlap with the third electrode 140c. For example, the second electrode 140b may be electrically connected to the third electrode 140c through the conductive balls in the second sealant 160b.

As described above, in the embodiment of the present disclosure, the sealants including the first sealant 160a and the second sealant 160b are doubly formed in the bezel area BA of the display panel 100, and capacitance sensing structures configured by the first electrode 140a and the second electrode 140b are formed in and/or adjacent to the first sealant 160a and the second sealant 160b, such that the cell gap in the bezel area BA may be measured and monitored.

Specifically, a gate electrode 121 and a gate line may be disposed in the display area AA, e.g., the TFT area of the array substrate 110 made of a transparent insulating material such as glass.

The gate electrode 121 may constitute a part of the gate line 116.

For example, the gate line 116 may be disposed in a first direction.

In addition, the gate drive circuit 175, the sensing line 170a, and the common signal line 170b may be disposed in the non-display area NA, e.g., the bezel area BA of the array substrate 110.

The gate electrode 121, the gate line 116, the gate drive circuit 175, the sensing line 170a, and the common signal line 170b may each be formed by depositing a first metal layer on a front surface of the array substrate 110 and selectively patterning the first metal layer through a photolithography process.

In this case, the first metal layer may include at least any one selected from a group of conductive metals including aluminum (Al), aluminum alloy (Al alloy), tungsten (W), copper (Cu), copper alloy, molybdenum (Mo), silver (Ag), silver alloy (Ag alloy), gold (Au), gold alloy (Au alloy), chromium (Cr), titanium (Ti), titanium alloy, molybdenum-tungsten (MoW), molybdenum-titanium (MoTi), and copper/molybdenum-titanium (Cu/MoTi), a combination of two or more of these materials, or other appropriate materials.

For example, the gate drive circuit 175 may be implemented in a gate-on-array (GOA) manner or a gate-in-panel (GIP) manner. However, the present disclosure is not limited thereto. In case that the gate drive circuit 175 is implemented in the GOA or GIP manner, for example, the gate drive circuit 175 may be integrated with the array substrate 110 and included in the array substrate 110, such that the gate drive circuit 175 may be a part of the array substrate 110.

For example, a sensing signal for sensing the cell gap in the bezel area BA may be applied to the sensing line 170a. For example, the sensing line 170a may be disposed between the gate drive circuit 175 and the display area AA and disposed in the same direction as the data line 117. i.e. the second direction. One end of the sensing line 170a may extend to the drive circuit 180, such that the sensing line 170a may be supplied with the sensing signal.

For example, a common electrode signal may be applied to the common signal line 170b. However, the present disclosure is not limited thereto. For example, the common signal line 170b may be disposed outside from the gate drive circuit 175 and disposed in the same direction as the data line 117. One end of the common signal line 170b may extend to the drive circuit 180, such that the common signal line 170b may be supplied with the common electrode signal. The common signal line 170b may at least partially overlap with the second sealant 160a.

A first insulation layer 115a may be disposed on the front surface of the array substrate 110 on which the gate electrode 121, the gate line, the gate drive circuit 175, the sensing line 170a, and the common signal line 170b are disposed.

The first insulation layer 115a may be a gate insulation layer and include a silicon (Si)-based oxide film, a nitride film, a compound including these films, a metal oxide film containing Al₂O₃, an organic insulation film, or a material with a dielectric constant (low-k) value.

For example, the first insulation layer 115a may formed in and/or extend to the non-display area NA.

An active layer 124 may be disposed on the first insulation layer 115a.

The active layer 124 may be configured as a semiconductor layer.

The semiconductor layer may include amorphous silicon (a-Si), low-temperature polycrystalline silicon (LTPS), IGZO-based oxide semiconductors, compound semiconductors, carbon nanotubes, graphene and organic semiconductors, or the like.

The oxide semiconductor may be made of a material, which is made by adding silicon (Si) to an oxide semiconductor including zinc (Zn), and one or more materials selected from a group consisting of germanium (Ge), tin (Sn), lead (Pb), indium (In), titanium (Ti), gallium (Ga), and aluminum (Al). For example, the semiconductor layer may be made of silicon indium zinc oxide (Si-InZnO: SIZO) made by adding silicon ions to indium zinc composite oxide (InZnO).

In case that the semiconductor layer is made of SIZO, a composition ratio of the silicon (Si) atom content to the total content of zinc (Zn), indium (In), and silicon (Si) atoms in the active layer 124 may be about 0.001 weight% (wt.%) to about 30 wt.%. As the silicon (Si) atom content increases, the function of controlling electron generation may be improved, the mobility may be decreased, and the stability of the elements may be improved. However, the present disclosure is not limited thereto.

For example, in case that the active layer 124 is made of an amorphous silicon thin-film, an n+ amorphous silicon thin-film pattern 125n, which is patterned in substantially the same shape as the active layer 124, may be disposed on the active layer 124. However, the present disclosure is not limited thereto.

A source electrode 122 and a drain electrode 123 may be disposed on the active layer 124.

The data line 117 may be disposed on the same layer as the source electrode 122 and the drain electrode 123.

The data line 117, the source electrode 122, and the drain electrode 123 may constitute a second metal layer.

The second metal layer may include at least any one selected from a group of conductive metals including aluminum (Al), aluminum alloy (Al alloy), tungsten (W), copper (Cu), copper alloy, molybdenum (Mo), silver (Ag), silver alloy (Ag alloy), gold (Au), gold alloy (Au alloy), chromium (Cr), titanium (Ti), titanium alloy (Ti alloy), molybdenum-tungsten (MoW), molybdenum-titanium (MoTi), and copper/molybdenum-titanium (Cu/MoTi), a combination of two or more of these materials, or other appropriate materials.

As described above, the data lines 117 may be disposed in the second direction different from the first direction and separate the plurality of sub-pixels P together with the gate lines.

The gate electrode 121 connected to the gate line, the active layer 124 disposed above and/or on the gate electrode 121, the source electrode 122 connected to the data line 117, and the drain electrode 123 disposed to be opposite to the source electrode 122 may constitute the thin-film transistor.

A second insulation layer 115b may be disposed on the same layer on the data line 117, the source electrode 122, and the drain electrode 123.

For example, the second insulation layer 115b may be an interlayer insulation layer and include a silicon (Si)-based oxide film, a nitride film, a compound including these films, a metal oxide film containing Al₂O₃, an organic insulation film, or a material with a dielectric constant (low-k) value.

For example, the second insulation layer 115b may extend to the non-display area NA.

A third insulation layer 115c may be disposed on the second insulation layer 115b.

For example, the third insulation layer 115c may be a planarization layer and include a silicon (Si)-based oxide film, a nitride film, a compound including these films, a metal oxide film containing Al₂O₃, an organic insulation film, or a material with a dielectric constant (low-k) value.

For example, the third insulation layer 115c may extend to the non-display area NA.

The pixel electrode 118 may be disposed on the third insulation layer 115c.

For example, the pixel electrode 118 may be formed in a box shape on the sub-pixel P.

For example, the pixel electrode 118 may be made of a transparent conductive material, such as indium-tin-oxide (ITO) or indium-zinc-oxide (IZO), that has a high transmittance rate. However, the present disclosure is not limited thereto.

A fourth insulation layer 115d may be disposed on the pixel electrode 118.

For example, the fourth insulation layer 115d may include a silicon (Si)-based oxide film, a nitride film, a compound including these films, a metal oxide film containing Al₂O₃, an organic insulation film, or a material with a dielectric constant (low-k) value.

For example, the fourth insulation layer 115d may extend to the non-display area NA.

For example, predetermined areas of the first insulation layer 115a, the second insulation layer 115b, and the third insulation layer 115c are selectively removed, such that a drain contact hole through which a part of the drain electrode 123 is exposed may be formed. In addition, for example, predetermined areas of the first insulation layer 115a, the second insulation layer 115b, the third insulation layer 115c, and the fourth insulation layer 115d are selectively removed, such that the first contact hole 145a, through which a part of the sensing line 170a is exposed, may be formed, and the second contact hole 145b, through which a part of the common signal line 170b is exposed, may be formed.

For example, the first contact hole 145a may be disposed, one for each sensor block SB, and the second contact hole 145b may be provided as a plurality of second contact holes 145b for each block SB. However, the present disclosure is not limited thereto. The sensor block SB may be (arbitrarily) configured to sense and/or monitor the capacitance between the first and second electrodes. The sensor block SB may include the first electrode 140a, the second electrode 140b, and the second liquid crystal layer 130a forming a capacitance.

In addition, the common electrode 108 having a plurality of slits 108s may be disposed on the fourth insulation layer 115d.

The common electrode 108 may be disposed in a finger or herringbone shape in the sub-pixel P. However, the present disclosure is not limited thereto. The common electrode 108 may be disposed in a straight shape in the second direction (vertical direction ) or first direction (horizontal direction).

In addition, the first electrode 140a and the third electrode 140c may be disposed on the fourth insulation layer 115d in the non-display area NA.

For example, the first electrode 140a may be electrically connected to the sensing line 170a through the first contact hole 145a. Further, the third electrode 140c may be electrically connected to the common signal line 170b through a corresponding one of the at least one second contact hole 145b.

The first electrode 140a and the third electrode 140c may be spaced apart from each other. The third electrode 140c may be spaced apart from the first electrode 140a outwards from the display area AA.

The first electrode 140a may have a shape corresponding to all or at least one of the sensor blocks SB. For example, the first electrode 140a may have a quadrangular shape corresponding to a sensor block SB, and a part of the first electrode 140a may extend toward the sensing line 170a.

The first electrode 140a may comprise at least rectangular shaped part and at least one part extending therefrom toward the sensing line. The at least one rectangular shaped part may form a sensor block SB. The first electrode may comprise at least one further part respectively extending from the rectangular shaped part toward the sensor line 170a. The first electrode 140a may be electrically connected to the sensor line 170a via the at least one further part. The first electrode 140a may contact the sensing line 170a via the at least one extending part.

The third electrode 140c may be disposed outside the first electrode 140a. For example, the third electrode 140c may be disposed above and/or on the common signal line 170b along the common signal line 170b and overlap the common signal line 170b. However, the present disclosure is not limited thereto.

The array substrate 110, which is configured as described above, may be attached to the color filter substrate 105 disposed above and/or on the array substrate 110, thereby constituting the display panel 100. The liquid crystal layer 130 is interposed between the array substrate 110 and the color filter substrate 105. Further, the first spacer 150 may be disposed between the color filter substrate 105 and the array substrate 110 to maintain the cell gap between the color filter substrate 105 and the array substrate 110. In this case, for example, the first spacer 150 may be configured as a column spacer.

For example, the array substrate 110, which is configured as described above, is attached to the color filter substrate 105 so as to be opposite to the color filter substrate 105 by the first sealant 160a formed at the outer periphery of the display area AA.

In this case, the color filter substrate 105 includes the black matrix 106 to suppress a leak of light into the thin film transistors, the gate lines and the data lines 117, and the color filter including the red, green, and blue sub-color filters 107.

Meanwhile, in the embodiment of the present disclosure, the second sealant 160b may be disposed in the bezel area BA disposed outside the first sealant 160a. For example, the second sealant 160b may be disposed in the bezel area BA disposed between the color filter substrate 105 and the array substrate 110.

For example, the second sealant 160b may include the conductive balls.

In addition, the second liquid crystal layer 130a may be disposed between the first sealant 160a and the second sealant 160b. For example, the second liquid crystal layer 130a may be configured as a liquid crystal different in type from the liquid crystal of the liquid crystal layer 130 in the display area AA. However, the present disclosure is not limited thereto.

For example, the second liquid crystal layer 130a may include a liquid crystal with a permittivity of 0 or a low permittivity so as not to be affected by electric fields between the first electrode 140a and the third electrode 140c of the array substrate 110 and the second electrode 140b of the color filter substrate 105.

The second electrode 140b may be disposed above and/or on the color filter substrate 105 in the bezel area BA. For example, the second electrode 140b may be electrically connected to the third electrode 140c through the conductive balls in the second sealant 160b. Therefore, the second electrode 140b may receive the common electrode signal supplied to the common signal line 170b.

For example, the second electrode 140b may have a box or rectangular shape including (or covering) all the plurality of sensor blocks SB. However, the present disclosure is not limited thereto.

A second spacer 150a may be disposed between the first electrode 140a and the second electrode 140b. The second spacer 150a may serve to maintain the cell gap between the color filter substrate 105 and the array substrate 110 in the bezel area BA. For example, the second spacer 150a may be configured as a column spacer.

The second spacer 150a may have a different height from the first spacer 150. The second spacer 150a and the first spacer 150 may be made of the same material or different materials.

In this case, the capacitance sensing structure may be formed between the first electrode 140a, to which the sensing signal is applied, and the second electrode 140b to which the common electrode signal is applied. Therefore, the cell gap in the bezel area BA may be measured and monitored. As a result, it is possible to monitor, in real time, the change in capacitance (Cap) during the module process and immediately cope with a defect. In addition, it is possible to improve reliability by suppressing an image defect, such as a yellow mura or a bright spot, caused by an external force. For example, the change in capacitance (Cap) may be recognized when the cell gap fluctuates because of stress, such that the stress applied to the display panel 100 may be monitored. For reference, in the related art, the bezel area cannot transmit light because of the black matrix, and the cell gap cannot be measured. In contrast, in the embodiment of the present disclosure, the capacitance sensing structure is formed in the bezel area BA, which may monitor the change in capacitance (Cap) in real time. In particular, the embodiment of the present disclosure is advantageous in performing quantitative stress analysis on the plurality of sensor blocks SB.

As described above, the present disclosure may actively cope with the non-uniformity of the cell gap in the bezel area BA caused by the increase of narrow bezel models.

The exemplary embodiments of the present disclosure can also be described as follows:

According to an aspect of the present disclosure, there is provided a display device. The display device includes a first substrate including a display area and a non-display area, a second substrate attached to the first substrate in a state in which a first sealant is disposed, a first liquid crystal layer disposed inside the first sealant, a second sealant disposed outside the first sealant, a second liquid crystal layer disposed between the first sealant and the second sealant, a first electrode disposed over the first substrate in the non-display area and a second electrode disposed over the second substrate in the non-display area and configured to define a capacitance together with the first electrode.

The second liquid crystal layer and the first liquid crystal layer may be made of different materials.

The display device may further comprise a first spacer disposed between the first substrate and the second substrate in the display area and configured to maintain a first cell gap; and a second spacer disposed between the first substrate and the second substrate in the non-display area and configured to maintain a second cell gap.

The first cell gap and the second cell gap may be different from each other, and the first spacer and the second spacer may have different heights.

The second spacer may be disposed between the first electrode and the second electrode.

The display device may further comprise a third electrode disposed below the second sealant disposed outside the first electrode.

The display device may further comprise a sensing line disposed below the first sealant, one end of the sensing line may be connected to a drive circuit and supplied with a sensing signal.

The display device may further comprise a common signal line disposed below the second sealant, one end of the common signal line may be connected to the drive circuit and supplied with a common electrode signal.

The first electrode may be connected to the sensing line through a first contact hole, and the first contact hole may be disposed, one for each sensor block.

The first electrode may have a shape corresponding to the sensor block, and a part of the first electrode may extend toward the sensing line.

The third electrode may be connected to the common signal line through a second contact hole, and the second contact hole may be provided as a plurality of second contact holes disposed for each of the blocks.

The second sealant may include a conductive ball, and the second electrode may be connected to the third electrode through the conductive ball.

The second electrode may have a shape for covering all the plurality of sensor blocks.

The third electrode may be disposed over the common signal line along the common signal line and may overlap the common signal line.

The display device may further comprise a black matrix disposed over the second substrate, the second electrode may be disposed over the black matrix.

Although the exemplary embodiments of the present disclosure have been described in detail with reference to the accompanying drawings, the present disclosure is not limited thereto and may be embodied in many different forms without departing from the technical concept of the present disclosure. Therefore, the exemplary embodiments of the present disclosure are provided for illustrative purposes only but not intended to limit the technical concept of the present disclosure. The scope of the technical concept of the present disclosure is not limited thereto. Therefore, it should be understood that the above-described exemplary embodiments are illustrative in all aspects and do not limit the present disclosure. The scope of protection of the claimed invention is defined by the appended claims.

## Claims

1. A display device comprising:
a first substrate (110) including a display area (AA) and a non-display area (NDA);
a second substrate (105) attached to the first substrate (110);
a first sealant (160a) disposed between the first substrate (110) and the second substrate (105);
a first liquid crystal layer (130) surrounded by the first sealant (160a);
a second sealant (160b) surrounding the first sealant (160a) by being spaced apart therefrom;
a second liquid crystal layer (130a) disposed between the first sealant (160a) and the second sealant (160b);
a first electrode (140a) disposed in the non-display area (NDA); and
a second electrode (140b) disposed in the non-display area (NDA),
wherein the first electrode (140a) and the second electrode (140b) are disposed to face each other with the second liquid crystal layer disposed therebetween in order to form a capacitance between the second electrode (140b) and the first electrode (140a),
**characterized in that**
the display device is configured to monitor and/or sense the capacitance formed between the second electrode (140b) and the first electrode (140a) for measuring and monitoring a cell gap in the non-display area (NDA).

2. The display device of claim 1, wherein the second liquid crystal layer (130a) and the first liquid crystal layer (130) are made of or include different materials.

3. The display device of any one of the preceding claims, further comprising:
a first spacer (150) disposed between the first substrate (110) and the second substrate (105) in the display area (AA) and configured to maintain a first cell gap; and/or
a second spacer (150a) disposed between the first substrate (110) and the second substrate (105) in the non-display area (NDA) and configured to maintain a second cell gap.

4. The display device of claim 3, wherein the first cell gap and the second cell gap are different from each other, and/or
wherein the first spacer and the second spacer have different heights.

5. The display device of claim 3 or 4, wherein the second spacer is disposed between the first electrode (140a) and the second electrode (140b).

6. The display device of any one of the preceding claims, further comprising:
a sensing line (170a) disposed below the first sealant (160a) and/or between the first electrode (140a) and the first substrate (110),
wherein the sensing line is electrically connected to a drive circuit (180) of the display device to be supplied with a sensing signal.

7. The display device of claim 6, wherein the first electrode (140a) contacts the sensing line (170a) through at least one first contact hole (145a).

8. The display device of claim 7, wherein the first electrode (140a) has at least one rectangular shaped part and at least one part extending therefrom toward the sensing line (170a), wherein the first electrode contacts the sensing line preferably via the at least one extending part.

9. The display device of any one of the preceding claims, further comprising:
a third electrode (140c) disposed below the second sealant (160b) and/or disposed outside the first electrode (140a) and/or disposed between the second sealant (160b) and the first substrate (110).

10. The display device of claim 9, further comprising:
a common signal line (170b) disposed below the second sealant (160b) and/or between the third electrode (140c) and the first substrate (110),
wherein the common signal line is electrically connected to the drive circuit (180) and/or supplied with a common electrode signal.

11. The display device of claim 10, wherein the third electrode (140c) contacts the common signal line (170b) through a plurality of second contact holes (145b).

12. The display device of any one of claims 9 to 11, wherein the second sealant (160b) includes at least one conductive ball, and
wherein the second electrode (140b) is electrically connected to the third electrode (140c) through the at least one conductive ball.

13. The display device of any one of claims 9 to 12, wherein the third electrode (140c) is disposed over and/or overlapping with a portion of the common signal line (170b) and/or is disposed along the common signal line (170b).

14. The display device of any one of the preceding claims, wherein the second electrode (140b) is arranged to cover all of the at least one rectangular shaped part of the first electrode (140b).

15. The display device of claim 1, further comprising:
a black matrix (106) disposed over the second substrate (105),
wherein the second electrode (140b) is disposed over the black matrix (106), and/or wherein the black matrix (106) is disposed between the second electrode (140b) and the second substrate (105).

## Patentansprüche

1. Anzeigevorrichtung, die umfasst:
ein erstes Substrat (110), das einen Anzeigebereich (AA) und einen Nichtanzeigebereich (NDA) enthält;
ein zweites Substrat (105), das an dem ersten Substrat (110) angebracht ist;
ein erstes Dichtungsmittel (160a), das zwischen dem ersten Substrat (110) und dem zweiten Substrat (105) angeordnet ist;
eine erste Flüssigkristallschicht (130), die von dem ersten Dichtungsmittel (160a) umgeben ist;
ein zweites Dichtungsmittel (160b), das das erste Dichtungsmittel (160a) umgibt, indem es von ihm beabstandet ist;
eine zweite Flüssigkristallschicht (130a), die zwischen dem ersten Dichtungsmittel (160a) und dem zweiten Dichtungsmittel (160b) angeordnet ist;
eine erste Elektrode (140a), die in dem Nichtanzeigebereich (NDA) angeordnet ist; und
eine zweite Elektrode (140b), die in dem Nichtanzeigebereich (NDA) angeordnet ist,
wobei die erste Elektrode (140a) und die zweite Elektrode (140b) so angeordnet sind, dass sie einander zugewandt sind, wobei die zweite Flüssigkristallschicht zwischen ihnen angeordnet ist, um eine Kapazität zwischen der zweiten Elektrode (140b) und der ersten Elektrode (140a) zu bilden,
**dadurch gekennzeichnet, dass**
die Anzeigevorrichtung konfiguriert ist, die zwischen der zweiten Elektrode (140b) und der ersten Elektrode (140a) gebildete Kapazität zu überwachen und/oder zu erfassen, um einen Zellabstand in dem Nichtanzeigebereich (NDA) zu messen und zu überwachen.

2. Anzeigevorrichtung nach Anspruch 1, wobei die zweite Flüssigkristallschicht (130a) und die erste Flüssigkristallschicht (130) aus verschiedenen Materialien hergestellt sind oder verschiedene Materialien enthalten.

3. Anzeigevorrichtung nach einem der vorhergehenden Ansprüche, die ferner umfasst:
einen ersten Abstandhalter (150), der zwischen dem ersten Substrat (110) und dem zweiten Substrat (105) in dem Anzeigebereich (AA) angeordnet ist und konfiguriert ist, einen ersten Zellabstand aufrechtzuerhalten; und/oder
einen zweiten Abstandhalter (150a), der zwischen dem ersten Substrat (110) und dem zweiten Substrat (105) in dem Nichtanzeigebereich (NDA) angeordnet ist und konfiguriert ist, einen zweiten Zellabstand aufrechtzuerhalten.

4. Anzeigevorrichtung nach Anspruch 3, wobei der erste Zellabstand und der zweite Zellabstand voneinander verschieden sind und/oder
wobei der erste Abstandhalter und der zweite Abstandhalter verschiedene Höhen aufweisen.

5. Anzeigevorrichtung nach Anspruch 3 oder 4, wobei der zweite Abstandhalter zwischen der ersten Elektrode (140a) und der zweiten Elektrode (140b) angeordnet ist.

6. Anzeigevorrichtung nach einem der vorhergehenden Ansprüche, die ferner umfasst:
eine Erfassungsleitung (170a), die unter dem ersten Dichtungsmittel (160a) und/oder zwischen der ersten Elektrode (140a) und dem ersten Substrat (110) angeordnet ist,
wobei die Erfassungsleitung mit einer Ansteuerungsschaltung (180) der Anzeigevorrichtung elektrisch verbunden ist, um mit einem Erfassungssignal versorgt zu werden.

7. Anzeigevorrichtung nach Anspruch 6, wobei die erste Elektrode (140a) die Erfassungsleitung (170a) durch mindestens ein erstes Kontaktloch (145a) kontaktiert.

8. Anzeigevorrichtung nach Anspruch 7, wobei die erste Elektrode (140a) mindestens einen rechteckig geformten Teil und mindestens einen Teil, der sich von ihm in Richtung der Erfassungsleitung (170a) erstreckt, umfasst, wobei die erste Elektrode die Erfassungsleitung vorzugsweise über den mindestens einen sich erstreckenden Teil kontaktiert.

9. Anzeigevorrichtung nach einem der vorhergehenden Ansprüche, die ferner umfasst:
eine dritte Elektrode (140c), die unter dem zweiten Dichtungsmittel (160b) angeordnet ist und/oder außerhalb der ersten Elektrode (140a) angeordnet ist und/oder zwischen dem zweiten Dichtungsmittel (160b) und dem ersten Substrat (110) angeordnet ist.

10. Anzeigevorrichtung nach Anspruch 9, die ferner umfasst:
eine gemeinsame Signalleitung (170b), die unter dem zweiten Dichtungsmittel (160b) und/oder zwischen der dritten Elektrode (140c) und dem ersten Substrat (110) angeordnet ist,
wobei die gemeinsame Signalleitung mit der Ansteuerungsschaltung (180) elektrisch verbunden ist und/oder mit einem gemeinsamen Elektrodensignal versorgt wird.

11. Anzeigevorrichtung nach Anspruch 10, wobei die dritte Elektrode (140c) die gemeinsame Signalleitung (170b) durch mehrere zweite Kontaktlöcher (145b) kontaktiert.

12. Anzeigevorrichtung nach einem der Ansprüche 9 bis 11, wobei das zweite Dichtungsmittel (160b) mindestens eine leitende Kugel enthält und
wobei die zweite Elektrode (140b) mit der dritten Elektrode (140c) durch die mindestens eine leitende Kugel elektrisch verbunden ist.

13. Anzeigevorrichtung nach einem der Ansprüche 9 bis 12, wobei die dritte Elektrode (140c) über einem Teil der gemeinsamen Signalleitung (170b) angeordnet ist und/oder diese überdeckt und/oder entlang der gemeinsamen Signalleitung (170b) angeordnet ist.

14. Anzeigevorrichtung nach einem der vorhergehenden Ansprüche, wobei die zweite Elektrode (140b) so angeordnet ist, dass sie alles des mindestens einen rechteckig geformten Teils der ersten Elektrode (140b) bedeckt.

15. Anzeigevorrichtung nach Anspruch 1, die ferner umfasst:
eine Schwarzmatrix (106), die über dem zweiten Substrat (105) angeordnet ist,
wobei die zweite Elektrode (140b) über der Schwarzmatrix (106) angeordnet ist und/oder wobei die Schwarzmatrix (106) zwischen der zweiten Elektrode (140b) und dem zweiten Substrat (105) angeordnet ist.

## Revendications

1. Dispositif d'affichage comportant :
un premier substrat (110) incluant une zone d'affichage (AA) et une zone de non-affichage (NDA) ;
un second substrat (105) fixé au premier substrat (110) ;
un premier agent d'étanchéité (160a) disposé entre le premier substrat (110) et le second substrat (105) ;
une première couche de cristaux liquides (130) entourée par le premier agent d'étanchéité (160a) ;
un second agent d'étanchéité (160b) entourant le premier agent d'étanchéité (160a) en étant espacé de celui-ci ;
une seconde couche de cristaux liquides (130a) disposée entre le premier agent d'étanchéité (160a) et le second agent d'étanchéité (160b) ;
une première électrode (140a) disposée dans la zone de non-affichage (NDA) ; et
une deuxième électrode (140b) disposée dans la zone de non-affichage (NDA),
dans lequel la première électrode (140a) et la deuxième électrode (140b) sont disposées l'une en face de l'autre avec la seconde couche de cristaux liquides disposée entre celles-ci afin de former une capacité entre la deuxième électrode (140b) et la première électrode (140a),
**caractérisé en ce que** le dispositif d'affichage est configuré pour surveiller et/ou détecter la capacité formée entre la deuxième électrode (140b) et la première électrode (140a) pour mesurer et surveiller un espace de cellule dans la zone de non-affichage (NDA).

2. Dispositif d'affichage selon la revendication 1, dans lequel la seconde couche de cristaux liquides (130a) et la première couche de cristaux liquides (130) sont constituées de matériaux différents ou incluent des matériaux différents.

3. Dispositif d'affichage selon l'une quelconque des revendications précédentes, comportant en outre :
un premier élément d'espacement (150) disposé entre le premier substrat (110) et le second substrat (105) dans la zone d'affichage (AA) et configuré pour maintenir un premier espace de cellule ; et/ou
un second élément d'espacement (150a) disposé entre le premier substrat (110) et le second substrat (105) dans la zone de non-affichage (NDA) et configuré pour maintenir un second espace de cellule.

4. Dispositif d'affichage selon la revendication 3, dans lequel le premier espace de cellule et le second espace de cellule sont différents l'un de l'autre, et/ou
dans lequel le premier élément d'espacement et le second élément d'espacement ont des hauteurs différentes.

5. Dispositif d'affichage selon la revendication 3 ou 4, dans lequel le second élément d'espacement est disposé entre la première électrode (140a) et la deuxième électrode (140b).

6. Dispositif d'affichage selon l'une quelconque des revendications précédentes, comportant en outre :
une ligne de détection (170a) disposée sous le premier matériau d'étanchéité (160a) et/ou entre la première électrode (140a) et le premier substrat (110),
dans lequel la ligne de détection est électriquement connectée à un circuit d'attaque (180) du dispositif d'affichage pour être alimentée avec un signal de détection.

7. Dispositif d'affichage selon la revendication 6, dans lequel la première électrode (140a) est en contact avec la ligne de détection (170a) par au moins un premier trou de contact (145a).

8. Dispositif d'affichage selon la revendication 7, dans lequel la première électrode (140a) a au moins une partie de forme rectangulaire et au moins une partie s'étendant à partir de celle-ci vers la ligne de détection (170a), dans lequel la première électrode est en contact avec la ligne de détection de préférence via la au moins une partie d'extension.

9. Dispositif d'affichage selon l'une quelconque des revendications précédentes, comportant en outre :
une troisième électrode (140c) disposée sous le second matériau d'étanchéité (160b) et/ou disposée à l'extérieur de la première électrode (140a) et/ou disposée entre le second matériau d'étanchéité (160b) et le premier substrat (110).

10. Dispositif d'affichage selon la revendication 9, comportant en outre :
une ligne de signal commune (170b) disposée sous le second matériau d'étanchéité (160b) et/ou entre la troisième électrode (140c) et le premier substrat (110),
dans lequel la ligne de signal commune est électriquement connectée au circuit d'attaque (180) et/ou est alimentée avec un signal d'électrode commun.

11. Dispositif d'affichage selon la revendication 10, dans lequel la troisième électrode (140c) est en contact avec la ligne de signal commune (170b) par une pluralité de seconds trous de contact (145b).

12. Dispositif d'affichage selon l'une quelconque des revendications 9 à 11, dans lequel le second matériau d'étanchéité (160b) inclut au moins une bille conductrice, et
dans lequel la deuxième électrode (140b) est électriquement connectée à la troisième électrode (140c) par l'intermédiaire de la au moins une bille conductrice.

13. Dispositif d'affichage selon l'une quelconque des revendications 9 à 12, dans lequel la troisième électrode (140c) est disposée au-dessus d'une partie de la ligne de signal commune (170b) et/ou chevauche celle-ci et/ou est disposée le long de la ligne de signal commune (170b).

14. Dispositif d'affichage selon l'une quelconque des revendications précédentes, dans lequel la deuxième électrode (140b) est agencée de manière à recouvrir la totalité de la au moins une partie de forme rectangulaire de la première électrode (140b).

15. Dispositif d'affichage selon la revendication 1, comportant en outre :
une matrice noire (106) disposée au-dessus du second substrat (105),
dans lequel la deuxième électrode (140b) est disposée au-dessus de la matrice noire (106), et/ou dans lequel la matrice noire (106) est disposée entre la deuxième électrode (140b) et le second substrat (105).
